(19) Europäisches Patentamt
European Patent Office
Office européen des brevets

(11) **EP 4 432 163 A1**

(12) **EUROPEAN PATENT APPLICATION**

(43) Date of publication:
**18.09.2024 Bulletin 2024/38**

(21) Application number: **23162188.9**

(22) Date of filing: **15.03.2023**

(51) International Patent Classification (IPC):
**G06N 3/045** (2023.01)    **G06N 3/096** (2023.01)

(52) Cooperative Patent Classification (CPC):
**G06N 3/096; G06N 3/045**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **TOYOTA JIDOSHA KABUSHIKI KAISHA Aichi-Ken 471-8571 (JP)**
- **The Chancellor, Masters and Scholars of the University of Cambridge Cambridge CB2 1TN (GB)**

(72) Inventors:
- **ALJUNDI, Rahaf 1140 BRUSSELS (BE)**
- **OLMEDA REINO, Daniel 1140 BRUSSELS (BE)**
- **TURNER, Richard CAMBRIDGE, CB2 1TN (GB)**
- **PANOS, Aristeidis CAMBRIDGE, CB2 1TN (GB)**
- **KOBE, Yuriko CAMBRIDGE, CB2 1TN (GB)**

(74) Representative: **Cabinet Beau de Loménie 158, rue de l'Université 75340 Paris Cedex 07 (FR)**

Remarks:
Amended claims in accordance with Rule 137(2) EPC.

(54) **METHOD OF CLASSIFYING DATA IN A CLASS INCREMENTAL LEARNING CONTEXT**

(57)    A computer-implemented method of generating a machine learning model for classification using a pre-trained backbone model, comprising:
- for a first training session, training (E30) the pre-trained backbone model using a first dataset,
- connecting (E50) a classification head model on top of the trained backbone model, so as to obtain a main model,
- for at least one second training session, training (E70) the main model using a second dataset while keeping the parameters of the trained backbone model fixed, the second dataset comprising at least one class distinct from the classes of the first dataset.

FIG.3

**Description**

BACKGROUND OF THE INVENTION

1. Field of the Invention

The invention relates to the general field of automatic data processing. More particularly, it relates to a method of generating a machine learning model for classification and a method of classifying data with the generated machine learning model. The invention also relates to a data processing system configured to perform said generation method and said classification method.

2. Description of Related Art

Today, one of the most common uses of data is automatic classification. This tremendous success is largely due to a combination of various factors, including ever larger datasets with labelled (e.g. annotated) data used for training or inference, and ever more powerful computing resources (processing units) to manage such an amount of data.

Data classification is therefore the subject of considerable research. In particular, one area of research that is receiving a lot of attention and is considered very promising is that of continual learning, as it has the potential to bring machine learning models to many real-life applications.

The development of continual learning stems from the following problematic: after a model is trained on a given set of data, and once deployed in its test environment, it is likely that new classes will emerge. For example, in an autonomous driving scenario, a new type of road transportation or traffic sign may be encountered. Thus, the deployed model would need to efficiently acquire this new knowledge, preferably with minimal cost (e.g. annotation requirements) and without deteriorating the performance on existing classes of objects. The process of efficiently acquiring new knowledge while preserving what is already captured by the model is what continual learning methods target.

In general, continual learning can be mainly divided into two sub-domains: Task Incremental Learning (TIL) and Class Incremental Learning (CIL). TIL assumes learning independent sets of heterogeneous tasks. CIL, on the contrary, assumes that all classes (already learnt and future ones) are of one single task. As a result, CIL is considered as more challenging than TIL as a shared output layer is used for the classes of different learning sessions.

The present description is for the sole purpose of one task of classification (e.g. binary classification, multi-class classification, multi-label classification, imbalanced classification). Therefore, the sub-domain of TIL is out of the scope here. Nevertheless, for a survey of what is known to date about continual learning by class and by task, one may consult reference [1].

In CIL, data arrive in a sequence of sessions with new classes appearing as the sessions progress. Critically, the data in each session cannot be stored in its entirety and cannot be revisited (e.g. in situations where data are not allowed to be revisited due to privacy reasons such as under General Data Protection Regulation (GDPR)). Thus, the goal is to train a classification model under these constraints.

Even if important progress has been made recently in the design of algorithms aiming at implementing CIL, it should be noted that these solutions still lack efficiency. In particular, it is widely agreed today that good performance will generally require the features extracted by a backbone model/network (still commonly known as "neural network body" or "feature extractor model/network", such a backbone model being classically connected to a classification head model on top of it) to be adapted (i.e. trained) in each session of continual learning so that the features become refined to the task at hand. However, it is well known that this can lead to the algorithm forgetting classes that are seen in the earlier stages of continual learning, still known as the catastrophic forgetting/intransigence trade-off.

Furthermore, the continuous adaptation of the backbone model at each session turns out to be expensive in terms of computational load, not only in a few-shot setting/regime/scenario (i.e. only a few labelled examples per class are provided at each training session) but also especially in a high-shot setting/regime/scenario (i.e. large amounts of labelled examples per class are provided at each training session).

SUMMARY OF THE INVENTION

The purpose of the present invention is to overcome all or some of the limitations of the prior art, particularly those outlined here above, by providing a solution for classifying data according to a CIL framework in a more efficient way than prior art solutions.

By "more efficiently", one refers here to a solution capable of greatly reducing the computational load in all possible settings/regimes/scenarios, of classifying data with a high degree of accuracy, but also of avoiding the catastrophic forgetting/intransigence trade-off.

To this end, and according to a first aspect, the invention relates to a computer-implemented method of generating a machine learning model for classification using a pre-trained backbone model, comprising:

- for a first training session, training the pre-trained backbone model using a first dataset,
- connecting a classification head model on top of the trained backbone model, so as to obtain a main model,
- for at least one second training session, training the main model using a second dataset while keeping the parameters of the trained backbone model fixed, the second dataset comprising at least one class distinct from the classes of the first dataset.

Thus, the generation method according to the invention consists in adapting a pre-trained backbone model only during the first training session, and then keeping it frozen. The classification head model, in contrast, is adapted at each subsequent training session.

Proceeding in this way allows to generate a classifier in a very simple way, and thus very cheap in terms of computational load. Moreover, limiting the training of the backbone model to a single session does not deteriorate the performance of the generated classifier in all the settings considered (high-shot, few-shot), as it is illustrated in details below through a significant number of experiments.

Another advantage of the invention is that it is not necessary to store data from previous sessions when implementing a current session. These provisions greatly help to avoid the catastrophic forgetting/intransigence trade-off.

In particular embodiments, the generation method may furthermore include one or more of the following features, taken alone or in any technically feasible combination.

According to particular embodiments, the training of the main model is iterated sequentially for each of a plurality of training sessions, each training session being performed with a dataset comprising at least one class distinct from the classes of the datasets used in the previous sessions, the parameters of the trained backbone model being kept fixed during each of said plurality of training sessions.

According to particular embodiments, during the first training session, the training of the pre-trained backbone model is performed by updating the set of parameters of said backbone model.

According to particular embodiments, during the first training session, the training of the pre-trained backbone model comprises:

- modulating the pre-trained backbone model using a Feature-wise Linear Modulation (FiLM) technique, so as to generate an updated backbone model with additional parameters of Feature-wise Linear Modulation layers,
- training the updated backbone model using the first dataset, the parameters of the pre-updated backbone model being kept fixed and only the parameters of the Feature-wise Linear Modulation layers being learned during said training.

These features are particularly advantageous, because by combining a training of the backbone model during only the first session with FiLM layers, one obtains not only very good results in a high-shot setting, but also especially in a few-shot setting, as it appears from the various experiments described in detail later on.

According to particular embodiments, during the first training session, the training of the pre-trained backbone model comprises:

- connecting a classification layer on top of the backbone model,
- training the model composed of the backbone model and the classification layer using the first dataset and a cross-entropy loss function,
- removing the classification layer.

According to particular embodiments, the classification head model is a Linear Discriminant Analysis (LDA) classifier, and wherein, during each training session s of the main model, the weights and bias of said LDA classifier are determined according to the following formulas:

$$w_s^{(k)} = \ddot{H}_s^{-1}\hat{\mu}_s^{(k)} \quad and \quad b_s^{(k)} = \ln\frac{\left|X_s^{(k)}\right|}{\sum_{i=1}^{s} N_i} - \frac{1}{2}\hat{\mu}_s^{(k)^T}\ddot{H}_s^{-1}\hat{\mu}_s^{(k)}$$

where

$$\ddot{H}_s = H_s + I_d$$

$$\hat{\mu}_s^{(k)} = \frac{1}{\left|X_s^{(k)}\right|} \sum_{x \in X_s^{(k)}} g_{\theta^*}(x)$$

- $w_s^{(k)}$ and $b_s^{(k)}$ being respectively the weight and the bias of class k of said training session s,
- $H_s$ and $\ddot{H}_s$ being respectively the sample covariance matrix and the regularized sample covariance matrix of said training session s,
- $I_d$ being an identity matrix,
- $g_{\theta*}$ being the trained backbone model with fixed parameters $\theta^*$,
- $X_s^{(k)}$ being the set of data belonging in class k of said training session s, and $|X_s^{(k)}|$ being the cardinality of $X_s^{(k)}$,
- $X_s$ being the set of data of said training session s, and $N_s$ being the cardinality of $X_s$.

According to particular embodiments, the sample covariance matrix $H_s$ is determined during each training session s of the main model according to the following formula:

$$H_s = \frac{1}{C-1}\left(A - \frac{1}{C}bb^T\right)$$

the parameters C, A and b being initialized t in the following way:

$$C = N_1$$

$$A = \sum_{x \in X_1} g_{\theta^*}(x) g_{\theta^*}(x)^T$$

$$b = \sum_{x \in X_1} g_{\theta^*}(x)$$

and thereafter determined recursively at each training session s of the main model in the following way:

- A is equal to the sum of the value taken by A during the previous training session of the main model and the quantity $\Sigma_{x \in X_s} g_{\theta*}(x)g_{\theta*}(x)^T$,
- b is equal to the sum of the value taken by b during the previous training session of the main model and the quantity $E_{x \in X_s} g_{\theta*}(x)$,
- C is equal to the sum of the value taken by C during the previous training session of the main model and the quantity $N_s$.

According to particular embodiments, the classification head model is a Nearest Class Mean (NCM) classifier, and wherein, during each training session s of the main model, the weights and bias of said NCM classifier are determined according to the following formulas:

$$w_s^{(k)} = \hat{\mu}_s^{(k)} \quad and \quad b_s^{(k)} = \ln \frac{\left|X_s^{(k)}\right|}{\sum_{i=1}^{s} N_i} - \frac{1}{2}\hat{\mu}_s^{(k)^T}\hat{\mu}_s^{(k)}$$

where

$$\hat{\mu}_s^{(k)} = \frac{1}{\left|X_s^{(k)}\right|} \sum_{x \in X_s^{(k)}} g_{\theta^*}(x)$$

- $w_s^{(k)}$ and $b_s^{(k)}$ being respectively the weight and the bias of class k of said training session s,
- $g_{\theta*}$ being the trained backbone model with fixed parameters $\theta^*$,
- $X_s^{(k)}$ being the set of data belonging in class k of said training session s, and $|X_s^{(k)}|$ being the cardinality of $X_s^{(k)}$,
- $N_i$ being the cardinality of $X_i$, where $X_i$ is the set of data of said training session i.

According to particular embodiments, the classification head model is a parametrized classification linear head, and wherein, during each training session of the classification head model, the training comprises learning the weights and bias of the classification head model by performing an iterative gradient descent.

According to particular embodiments:

- the training sessions of the backbone model and the classification head model are performed according to a high-shot setting, or
- the first training session of the backbone model is performed according to a high-shot setting and the training sessions of the classification head model are performed according to a few-shot setting, or
- the training sessions of the backbone model and the classification head model are performed according to a few-shot setting.

According to a second aspect, the invention also relates to computer-implemented method of classifying data, comprising:

- generating a machine learning model for classification according to the invention,
- classifying data with the generated machine learning model.

According to particular embodiments, the data to be classified are one of:

- images or features that have been extracted from images, for example images of road traffic or features that have been extracted from images of road traffic,
- CAN data obtained from sensors equipping a vehicle,
- video data,
- audio or voice data.

According to a third aspect, the invention also relates to the use of a classification method according to the invention for at least one of:

- adapting the operation of a vehicle, for example to learn traffic signs,
- adapting the operation of a humanoid, for example to learn moving and/or interacting in an environment.

According to a fourth aspect, the invention also relates to a computer program comprising instructions which, when the program is executed by a computer, cause the computer to perform a generation method or a classification method according to the invention.

This computer program can use any programming language and take the form of source code, object code or a code intermediate between source code and object code, such as a partially compiled form, or any other desirable form.

According to a fifth aspect, the invention also relates to a computer-readable medium comprising instructions which, when executed by a computer, cause the computer to perform a generation method or a classification method according to the invention.

The computer-readable medium can be any entity or device capable of storing the computer program. For example, the medium can include storage means such as a ROM, for example a CD ROM or a microelectronic circuit ROM, or magnetic storage means, for example a hard disk.

Alternatively, the computer-readable medium can be an integrated circuit in which the computer program is incorporated, the circuit being adapted to execute the alert method or to be used in its execution.

According to a sixth aspect, the invention also relates to a data processing system comprising means configured to perform a generation method or a classification method according to the invention.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 illustrates a particular embodiment of a data processing system according to the invention; and
FIG. 2 illustrates an example of the hardware architecture of a data processing device belonging to the data processing system of FIG. 1; and
FIG. 3 is a flowchart of a method of generating a machine learning model for classification according to a particular embodiment of the invention, steps of the generation method being performed by the data processing device of FIG. 2; and
FIG. 4 is a flowchart of a method of classifying data according to a particular embodiment of the invention, steps of the classification method being performed by the data processing device of FIG. 2; and
FIG. 5 is a graph illustrating a first performance result of the invention; and
FIG. 6 is a table illustrating a second performance result of the invention; and
FIG. 7 is a table illustrating a third performance result of the invention; and
FIG. 8 is a table illustrating a fourth performance result of the invention.

## DETAILED DESCRIPTION OF EMBODIMENTS

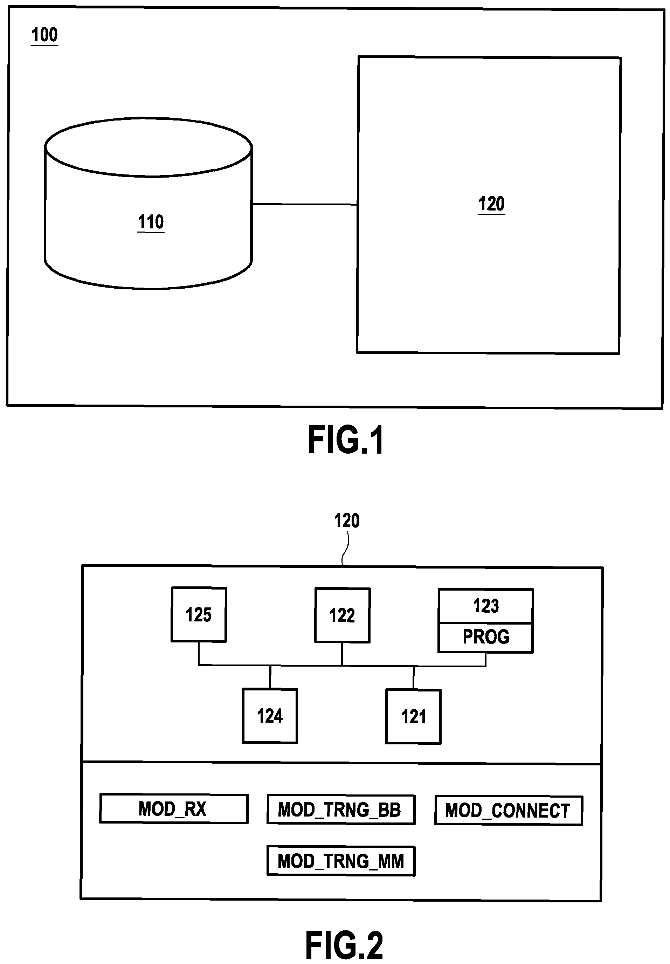

FIG. 1 illustrates a particular embodiment of a data processing system 100 according to the invention. Said system 100 is firstly configured to generate a machine learning model for classification, hereinafter referred to as the "classifier f".

The generation of the classifier f is done in the context of Class Incremental Learning (CIL) as mentioned before. In other words, the generation of the classifier f is carried out sequentially using data which arrive through different learning sessions which follow one another. In particular, one or more new classes appear at each new session, the objective being in particular to update the classifier f so that: 1) the predictions made on the data of the previous sessions remain accurate 2) the adaptation of the classifier f allows to accurately predict the data of the new class or classes of the current session. These aspects are described in more detail later on through several embodiments of the invention.

In addition, it should be noted that no limitation is attached to the nature of the classification task performed by the classifier f. Thus, it can be for example a binary classification, a multi-class classification, a multi-label classification, or an imbalanced classification.

As shown in FIG. 1, in the present embodiment the system 100 includes storage means 110. These storage means 110 store various data in the form of datasets, each of the datasets being intended to be used during a dedicated session when generating the classifier f. Said storage means 110 can be of any type known per se, such as a server comprising a database.

No limitation is attached to the type of data stored in the storage means 110 and intended to be used to generate the classifier f. It is further understood that, once generated, said classifier f is configured to perform a classification task from data of the same type as those used during its generation.

For example, if the inputs to the classifier f are images or features that have been extracted from images, the output generated by the classifier f for a given image may be an estimate of the a posteriori probability that the image contains an image of an object belonging to given classes.

This may include, for example, images of road traffic taken by an autonomous vehicle, so that it can be determined whether vehicles in the image are at risk of collision. Such a specific example of application is not limited to the use of road traffic images, and can be considered based on other types of data, such as CAN (Controller Area Network) data obtained from sensors equipping an (autonomous) vehicle.

Examples of other typical technical applications of a classification algorithm may include, without limitation: classification of digital images (e.g. in health care, for example cardiac monitoring in order to detect irregular beats of a patient), classification of video data, classification of audio or voice data (e.g. classifying speakers), classification of text data (e.g. classifying documents), etc.

In general, the invention can find application in any industrial and technical field where classification tasks must be performed. The invention is more particularly advantageous when one considers deploying pre-trained machine learning models in a new environment where new objects are likely to be encountered and where the models have to learn about. The data used to perform this learning are those stored in the storage means 110, and are for example obtained thanks to appropriate acquisition means (e.g. sensors). In more particular embodiments of the invention, such acquisition means are part of the system 100.

This refers, for example, to the case where a humanoid is deployed in a new home or in a factory. Therefore, said humanoid first performs an adaptation to the new environment. Then it can learn about new objects on the fly, in particular with few examples and while maintaining its performance on previously learned objects.

In the context of the automotive industry mentioned above, this refers also to the case where a vehicle is provided with a traffic sign recognition system deployed in a new country or city. Hence, the models adapt initially to the new environment and then can keep learning efficiently about previously unknown traffic signs.

Moreover, and according to particular embodiments, the data distribution (i.e. the distribution from which the datasets are drawn) can remains static across sessions so that it does not change dynamically, i.e. all data come from a same main dataset. However, such features are not limiting to the invention, and nothing excludes the possibility of considering other embodiments wherein the data distribution changes dynamically across all or part of the sessions.

In the present embodiment, in addition to data in the form of datasets, the storage means 110 also include machine learning models. In other words, the storage means 110 include code instructions defining such machine learning models. The nature of these machine learning models will be described in more detail later, it being understood that they are useful for generating the classifier f.

In the present embodiment, and as illustrated in FIG. 1, the system 100 also includes a data processing device 120 configured to generate the classifier f from the datasets contained in the storage means 110, by implementing a generation method according to the invention. As a reminder, since the generation of the classifier f is carried out in the CIL context, this means in particular that the datasets are obtained and used sequentially by the device 120 during the implementation of said generation method.

FIG. 2 illustrates an example of the hardware architecture of the data processing device 120 for performing said generation method.

As shown in FIG. 2, the device 120 has the hardware architecture of a computer and comprises, in particular, a processor 121, a random access memory 122, a read-only memory 123, a non-volatile memory 124 and communication means 125.

The read-only memory 123 of the device 120 constitutes a recording medium according to the invention, which is readable by processor 121 and on which is recorded a computer program PROG according to the invention, containing instructions for performing steps of the generation method. The program PROG defines functional modules of the device 120, which are based on or control the aforementioned elements 121 to 125 of the device 120. These functional modules are illustrated in FIG. 2 in a non-limiting way, and are described in more detail below with reference to the implementation of the generation method.

The communication means 125 allow the device 120 to receive data and machine learning models from the storage means 110. These communication means 125 are based, in a manner known per se, on a communication interface capable of exchanging datalmodels between the device 120 and the storage means 110. No limitation is attached to the nature of this communication interface, which can be wired or non-wired, so as to allow the exchange of datalmodels according to any protocol known to the skilled person (Ethernet, Wi-Fi, Bluetooth, 3G, 4G, 5G, etc.).

It should be noted that the system 100 is described in the present embodiment considering that the storage means 110 and the device 120 are two separate entities. However, the invention also covers other embodiments in which the datasets and machine learning models useful for implementing the generation method are already stored by the device 120 (e.g. stored in the non-volatile memory 124) before said generation method starts. In general, there is no limitation attached to the way the device 120 obtains the data and machine learning models useful for the implementation of the generation method.

Before detailing embodiments of the generation method, some notations are introduced in order to provide a suitable support to the description of these embodiments. Moreover, for the rest of the description, and for the sole purpose of defining an application context of the invention, it is considered in a non-limiting way that the data used to generate the classifier f are images.

Thus, we consider sessions indexed by an integer index s, with $s \in \{1,...,S\}$, it being understood that no limitation is attached to the value of S as long as it is strictly greater than 1. In particular, nothing excludes considering, for example, an infinite number of sessions, so that there is a never-ending stream of data to be processed.

Each session s is associated with a dataset $D_s = \{x_{i,s}, y_{i,s}\}$, with $i \in \{1,...,N_s\}$. For a fixed index s, the set $X_s = \{x_{i,s}\}$, with $i \in \{1,...,N_s\}$ is a set of images, and the set $Y_s = \{y_{i,s}\}$, with $i \in \{1,...,N_s\}$ is the set of corresponding labels with $y_{i,s} \in \Upsilon_s$. Here $\Upsilon_s$ is the label space of session s.

In general, the generation method can be implemented according to any embodiments where each new session is performed with a dataset comprising at least one class distinct from the classes of datasets used in the previous sessions. In other words, two cases may be considered. For example, label spaces can be mutually exclusive across sessions, i.e. $\Upsilon_s \cap \Upsilon_{\bar{s}} = \varnothing$, $\forall \bar{s} \neq s$, $D_s$ being the only dataset accessed during the current session s to train and update the classifier f. According to another example, one can consider sessions with overlapping label spaces.

Notation $f_s$ is also used to designate the classifier generated (by training) in a session s. In other words, the classifier f corresponds to the classifier generated once the generation method has reached its end (i.e. f corresponds to the last classifier $f_s$ generated). When a classifier $f_s$ is formed by assembling two models, namely a backbone model (also known as "feature extractor model" or "body") and a classification head model, this being the case at least when s is strictly greater than 1 as described in more detail later, said classifier $f_s$ is written according to the following formula:

$$f_s(x) = W_s^T g_{\theta_s}(x) + b_s$$

where:

- $g_{\theta s} \in \mathbb{R}^d$ is the backbone model with session-dependent parameters $\theta_s$,
- the classification head model comprises the class weights $W_s \in \mathbb{R}^d \times |\Upsilon_{1:s}|$,
- $\Upsilon_{1:s}$ is the union of the labels spaces $\Upsilon_j$ for j ranging from 1 to s, i.e. $\Upsilon_{1:s}$ is the label space of all distinct classes seen up to session s,
- $|\Upsilon_{1:s}|$ is the cardinality of $\Upsilon_{1:s}$,
- biases $b_s \in \mathbb{R}^{|\Upsilon_{1:s}|}$,
- the index "T" is the transposition operator.

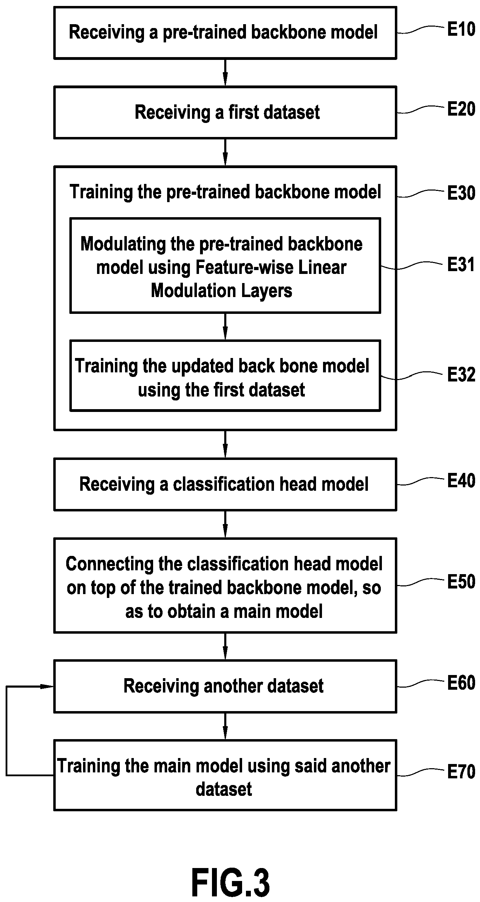

FIG. 3 is a flowchart of steps of the generation method according to a particular embodiment of the invention, these steps being performed by the device 120.

As will be apparent from the following description of said particular embodiment, steps of the generation method are described in a certain order of execution. However, it is important to note that such an order does not constitute a limitation of the invention, and it is not excluded that one or more steps may be performed in a different order according to any conceivable technical combination.

As shown in FIG. 3, the generation method includes a first step E10 of receiving a pre-trained backbone model $g_\theta$ (the index s does not yet appear at this stage since no training session has yet been considered). Said step E10 is performed by a reception module MOD_RX of the device 120 and integrated in the communication means 125.

As mentioned earlier, there is no limitation on how such a reception step E10 is implemented. For example, the reception of the pre-trained backbone model $g_\theta$ may follow the transmission by the device 120 of a request to the storage means 110.

The skilled person knows how to choose a pre-trained backbone model depending on the type of data he wants to classify (e.g. images) as well as on the targeted industrial application, so these aspects are not further detailed here. In any case, many detailed implementation examples are provided later.

Once the pre-trained backbone model $g_\theta$ has been received, the class-incremental learning phase can begin. To this end, for a first training session (i.e. s = 1), the generation method comprises a step E20 of receiving the first dataset D1. Said step E20 is also performed by the reception module MOD_RX of the device 120. And, here again, the reception of the first dataset D1 may follow the transmission by the device 120 of a request to the storage means 110.

Once the first dataset D1 has been received, the generation method comprises a step E30 of training said pre-trained backbone model $g_\theta$ using the first dataset D1. Said step E30 is performed by a first training module MOD_TRNG_BB of device 120.

The first training session of step E30 can be performed in different ways that may be related to the parameters of the backbone model $g_\theta$ that need to be updated via said training and/or to the training technique as such.

Thus, in the present embodiment illustrated in FIG. 3, the training of the pre-trained backbone model $g_\theta$ during the first session comprises the following substeps:

- modulating the pre-trained backbone model $g_\theta$ using a Feature-wise Linear Modulation technique (substep E31), so as to generate an updated backbone model with additional parameters of Feature-wise Linear Modulation layers, hereinafter referred to as the "FiLM layers",
- training the updated backbone model using the first dataset D1 (substep E32), the parameters of the pre-updated backbone model $g_\theta$ being kept fixed (i.e. frozen) and only the parameters of the FiLM layers being learned during said training.

The use of FiLM layers allows to introduce additional parameters which scale and shift the activations produced by a convolutional layer. These additional parameters can be generated by a meta-trained network when a downstream task is given. Alternatively, these additional parameters can be learned (fine-tuned) by the downstream data (i.e. the data of the dataset at hand). In general, the concept of FiLM layers and their use are known, so they are not further described here. Additional details can be obtained for example by consulting reference [2].

Considering a training of the pre-trained backbone $g_\theta$ model using FiLM layers is however only one variant of implementation of the training step E30, and nothing excludes to consider other variants. For example, the training of the pre-trained backbone model $g_\theta$ during the first session may be performed by updating the set of parameters of said backbone model. In other words, in this example, the full set of parameters of the pre-trained backbone model $g_\theta$ is trained (i.e. "full body adaptation"), no additional parameters being added.

As mentioned above, in addition to whether or not a FiLM technique or a full body adaptation is implemented, the training of the pre-trained backbone model $g_\theta$ can also be considered in terms of the training technique as such.

For example, during the first training session, the training of the pre-trained backbone model may comprise the following substeps:

- connecting (i.e; deploying) a (linear) classification layer on top of the backbone model, e.g. a softmax classification layer,
- training the model composed of the backbone model and the classification layer using the first dataset and a cross-entropy loss function,
- removing the classification layer.

Of course, considering the use of a classification layer and a cross-entropy loss function is only one variant of implementation of the invention. Other variants can be considered, such as using a matrix-based loss function without having to connect (deploy) a classification layer on top of the backbone model. In a general way, any training technique of a backbone model known to the skilled person can be considered.

At the end of the first training session, the pre-trained backbone model has been adapted and comprises updated parameters $\theta_1$. Since these parameters $\theta_1$ will now be fixed (frozen) for the rest of the training sessions aimed at generating the classifier f, they are noted $\theta^*$.

As shown in FIG. 3, the generation method further includes a step E40 of receiving a classification head model parameterized by class weights $W_s$. Since the first training session is completed and the second training session is about to bein, the index s is equal to 2 here. Said step E40 is performed by said reception module MOD_RX of the device 120.

Next, the generation method comprises a step E50 of connecting (deploying) the classification head model on top of the trained backbone model $g_{\theta*}$, so as to obtain a main model. Said step E50 is performed by a connection module MOD_CONNECT of the device 120.

Of course, it is understood that if a classification layer has been used to train the backbone model $g_\theta$ (or the updated backbone model comprising FiLM layers) during the first training session as described in a previous example, the generation method includes, before performing the step E50 of connecting the classification head model, a step of disconnecting (removing) said classification layer.

The main model obtained in this way comprises a fixed (frozen) part corresponding to the backbone model $g_{\theta*}$ and another part corresponding to said classification head model which is intended to be adapted sequentially during training sessions s $\in$ {2,..., S}.

The implementation of the second training session will now be described (s = 2), it being understood that each subsequent training session (s = 3, s = 4,..., s = S) is implemented in a similar manner.

The generation method further comprises a step E60 of receiving the second dataset $D_2$. Said step E60 is also performed by the reception module MOD_RX of the device 120.

As shown in FIG. 3, the generation method comprises a step E70 of training the main model using the second dataset $D_2$ while keeping the parameters $\theta^*$ of the trained backbone model $g_{\theta*}$ fixed. Said step E70 is performed by a second training module MOD_TRNG_MM of device 120.

It is therefore understood that if the backbone model $g_{\theta*}$ remains fixed, the training of the main model during the second training session implies that only the classification head model is updated.

In the present embodiment described with reference to FIG. 3, the classification head model is a Linear Discriminant Analysis (LDA) classifier. Such LDA classifier is known to be built on the assumption of common population covariance matrix across classes.

In practical terms, there are different implementation variants of an LDA classifier. In the present embodiment, a regularized version of the LDA classifier (still commonly referred to as "R-LDA") is implemented so that, during the second training session of the main model, the weights and bias of said LDA classifier are determined according to the following formulas:

$$w_2^{(k)} = \ddot{H}_2^{-1}\hat{\mu}_2^{(k)} \quad and \quad b_2^{(k)} = \ln\frac{\left|X_2^{(k)}\right|}{N_1 + N_2} - \frac{1}{2}\hat{\mu}_2^{(k)T}\ddot{H}_2^{-1}\hat{\mu}_2^{(k)}$$

where

$$\ddot{H}_2 = H_2 + I_d \quad with \quad I_d \in \mathbb{R}^{d \times d}$$

$$\hat{\mu}_2^{(k)} = \frac{1}{\left|X_2^{(k)}\right|} \sum_{x \in X_2^{(k)}} g_{\theta^*}(x)$$

- $w_2^{(k)}$ and $b_2^{(k)}$ being respectively the weight and the bias of class k of the second training session (i.e. taking into account the dataset $D_2$),
- $H_2$ and $\ddot{H}_2$ being respectively the sample covariance matrix and the regularized sample covariance matrix of the second training session,
- $I_d$ being an identity matrix,
- $X_2^{(k)}$ being the set of images (samples) belonging in class k of the second training session (i.e. $X_2^{(k)} = \{x_{i,2} : y_{i,2} = k\}$), and $|X_2^{(k)}|$ being the cardinality of $X_2^{(k)}$,
- $\hat{\mu}_2^{(k)}$ being the mean vector of the embedded images of class k of the second training session.

It should be noted that the weights and biases formulas are closed-formed formulas, which is particularly advantageous in the context of CIL in that it allows for exact, computationally inexpensive, and continual (via running averages) updates during each training session, and which moreover incur no forgetting.

As already mentioned, the above formulas are written considering only the second training session (s = 2). That said, they generalize in an obvious way to any training session s, with s > 1, by replacing the subscript "2" with a subscript "s". Ultimately, and as shown on FIG. 3, steps E60 and E70 are iterated sequentially for each of said training sessions s, with s > 1, so as to perform the classification head model training in the CIL context and while keeping the backbone model parameters θ* fixed.

It also follows from the previous formulas that updating the LDA classifier at each training session s, with s > 1, requires an update of the sample covariance matrix $H_s$ when the data of the current session becomes available. This can be done using a recursive algorithm until the last session (s = S). To this end, and according to a more particular example of implementation, the sample covariance matrix $H_s$ are determined during each training session s of the main model (i.e. during each set of steps E60 and E70) according to the following formula:

$$H_s = \frac{1}{C-1}\left(A - \frac{1}{C}bb^T\right)$$

the parameters C, A and b being initialized in the following way:

$$C = N_1$$

$$A = \sum_{x \in X_1} g_{\theta^*}(x)g_{\theta^*}(x)^T$$

$$b = \sum_{x \in X_1} g_{\theta^*}(x)$$

and thereafter determined recursively at each training session s of the main model in the following way:

- A is equal to the sum of the value taken by A during the previous training session of the main model and the quantity $\Sigma_{x \in X_s} g_{\theta^*}(x)g_{\theta^*}(x)^T$,
- b is equal to the sum of the value taken by b during the previous training session of the main model and the quantity $\Sigma_{x \in X_s} g_{\theta^*}(x)$,
- C is equal to the sum of the value taken by C during the previous training session of the main model and the quantity $N_s$.

These calculations of C, A and b are therefore based on an initialization that takes into account parameters from the first session, it being understood that these parameters from the first session are derived (and thereafter stored for the purpose of the recursive algorithm) from the following formulas:

$$w_1^{(k)} = \ddot{H}_1^{-1} \hat{\mu}_1^{(k)} \quad and \quad b_2^{(k)} = \ln \frac{\left| X_1^{(k)} \right|}{N_1} - \frac{1}{2} \hat{\mu}_1^{(k)^T} \ddot{H}_1^{-1} \hat{\mu}_1^{(k)}$$

$$\ddot{H}_1 = H_1 + I_d \quad with \quad I_d \in \mathbb{R}^{d \times d}$$

$$H_1 = \frac{1}{N_1 - 1} \sum_{x \in X_1} (g_{\theta^*}(x) - \hat{\mu}_1)(g_{\theta^*}(x) - \hat{\mu}_1)^T$$

$$\hat{\mu}_1^{(k)} = \frac{1}{\left| X_1^{(k)} \right|} \sum_{x \in X_1^{(k)}} g_{\theta^*}(x)$$

$$\hat{\mu}_1 = \frac{1}{N_1} \sum_{x \in X_1} g_{\theta^*}(x)$$

- $w_1^{(k)}$ and $b_1^{(k)}$ being respectively the weight and the bias of class k of the first training session (i.e. taking into account the dataset $D_1$),
- $H_1$ and $\ddot{H}_1$ being respectively the sample covariance matrix and the regularized sample covariance matrix of the first training session,
- $I_d$ being an identity matrix,
- $X_1^{(k)}$ being the set of images (samples) belonging in class k of the first training session (i.e. $X_1^{(k)} = \{x_{i,1} : y_{i,1} = k\}$), and $|X_1^{(k)}|$ being the cardinality of $X_1^{(k)}$,
- $\hat{\mu}_1^{(k)}$ being the mean vector of the embedded images of class k of the first training session,
- $\hat{\mu}_1$ being the mean vector of all embedded images of the first session training.

Computing the sample covariance matrix $H_s$ according to this iterative algorithm is particularly advantageous since the time and space complexities of learning the LDA classification head respectively scales as $O(d^3 + |\Upsilon_s|d^2)$ and $O(d^2 + |\Upsilon_{1:s}|d)$ at the s-th session. This computational burden is negligible compared to taking gradient steps for learning a linear head.

Considering an LDA classifier for the classification head model is, however, only one variant of implementation of the invention. Indeed, nothing excludes considering a classification head model of another type, such as a Nearest Class Mean (NCM) classifier.

According to a particular embodiment, such an NCM classifier is implemented so that, during each training session of the main model, the weights and bias of said NCM classifier are determined according to the following formulas (using the same notations as those introduced for the LDA classifier):

$$w_s^{(k)} = \hat{\mu}_s^{(k)} \quad and \quad b_s^{(k)} = \ln \frac{\left| X_s^{(k)} \right|}{\sum_{i=1}^s N_i} - \frac{1}{2} \hat{\mu}_s^{(k)^T} \hat{\mu}_s^{(k)}$$

Again, it should be noted that the weights and biases formulas are closed-formed formulas, which is particularly advantageous in the context of CIL.

According to yet another embodiment, the classification head model is a parametrized classification linear head, so that, during each training session of the classification head model, the training comprises learning the weights and bias of the classification head model by performing an iterative gradient descent.

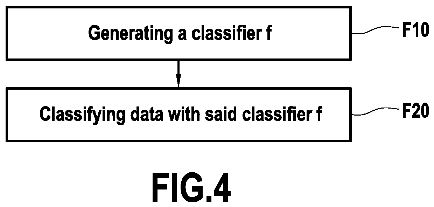

In the end, once the S training sessions have been completed, the generation method has allowed the generation of the classifier f formed by the trained backbone model with fixed parameters θ* and a classification head model trained during the training sessions s > 1. Thus, according to another aspect, the invention also covers a method of classifying data as illustrated by FIG. 4. Said classification method is also performed by the device 120, and comprises a step F10 of generating the classifier f (step F10 thus corresponds to the steps described above in the implementation of the generation method), as well as a step F20 of classifying data with said classifier f by the device 120.

It should be noted that the invention has been described so far considering a number $N_s$ of samples for each session s, with $s \in \{1,...,S\}$. The value of the number $N_s$ within each session s is not a limitation of the invention. In particular, the generation method can be implemented according to three different settings (scenarios, regimes) having the following features described below.

In a first setting, hereinafter referred to as "High-shot CIL", the training sessions of the backbone model (s = 1) and the classification head model (s > 1) are performed according to a high-shot setting. Accordingly, all the available training data for each class are considered while keeping the number of novel classes in each session low.

In a second setting, hereinafter referred to as "Few-shot+ CIL", the first training session of the backbone model is performed according to a high-shot setting and the training sessions of the classification head model are performed according to a few-shot setting". Accordingly, this setting involves an initial session (s = 1) that contains a large number of classes and all the available training images of these classes. The remaining sessions (s > 1) comprise a small number of classes and shots.

In a third setting, hereinafter referred to as "Few-shot CIL", the training sessions of the backbone model and the classification head model are performed according to a few-shot setting. Accordingly, this setting involves a small number of data in all sessions, including the first.

Further details concerning these different settings are now described through different experiments. More particularly, these experiments aim to illustrate in detail the operation of the invention, as well as its performance via comparison results with known solutions of the state of the art. In particular, it can be noted that the invention presents excellent performance results, in particular in "few-shot" type settings which are recognized as being the most challenging.

Experiments

Throughout these experiments, the term "FSA" alone ("First Session Adapation") is used to refer to the methods of the invention when the full set of parameters of the pre-trained backbone model is trained. On the other hand, when the training of the pre-trained backbone model is performed using FiLM layers as detailed above, one ueses the term "FSA-FiLM".

The outline of the experiments is as follows: first, datasets used for the experiments are detailed. Second, a large empirical comparison between LDA, linear, and NCM classifiers is performed, in combination with different backbone model adaptation techniques, in the offline setting. It is further considered how these findings are affected by the number of shots available. Third, performance of the invention in the CIL setting (as opposed to offline setting) is compared with state-of-the-art ("SOTA" hereinafter). Finally, the effect of adapting the backbone model when the CIL dataset is "similar" to ImageNet-1k is investigated.

It should be noted that from now on, as soon as a number is quoted in square brackets in the body of a paragraph, this number corresponds to one of the references listed at the end of the description.

1 - Datasets and Implementation details

1.1 - Datasets

A diverse collection of image-classification datasets is employed across the offline and CIL experiments. For the offline experiments (see section 2 below), the 19 datasets of VTAB [3], a low-shot transfer learning benchmark, plus three additional datasets, namely FGVC-Aircraft [4], Stanford Cars [5], and Letters [6] are used. This group of datasets is referred to as VTAB+. For the CIL-based experiments (see section 3 below), 5 VTAB+ datasets from different domains are chosen, having an adequate number of classes to create realistic CIL settings. The datasets are CIFAR100, SVHN, dSprites-location, FGVC-Aircraft, Cars and Letters while also including 4 extra datasets: CUB200 [7], CORE50 [8], iNaturalist [9], and DomainNet [10].

1.2 - Training details

All models are implemented with PyTorch. A pre-trained EfficientNet-BO [11] on Imagenet-1k is used as backbone model for all methods. For the few-shot+ CIL experiment (see section 3 below), two ResNet architectures are considered, ResNet-18 and ResNet-20 [12] to enable direct comparison to the original settings used in [13]. All the deployed backbones (except ResNet-20, due to the unavailability of pre-trained weights on ImageNet-1k), are pre-trained on ImageNet-1k for all methods. The optimization settings are kept the same across all baselines for fairness.

1.3 - Evaluation protocol

The Top-1 Is reported accuracy after the last continual learning session evaluated on a test set including instances from all the previously seen classes. To quantify the forgetting behaviour, a scaled modification of the performance dropping rate [14] is used, namely percent performance dropping rate (PPDR), defined as PPDR = 100 * (A1-AS)/A1 %, where A1 denotes test accuracy after the first session, and AS the test accuracy after the last session.

2 - Classification head models comparisons

The average accuracy of the LDA classification head model (for both FSA and FSA-FiLM) across all VTAB+ datasets is compared with that of the linear and NCM classifiers (offline experiments). For the backbone model, one considers no adaptation (NA) as a baseline (i.e. using the unadapted pre-trained backbone), FiLM-based adaptation (A-FiLM), and full-body adaptation (A-FB) while ranging the number of shots from 5 to 10, then 50, and finally using all available training data.

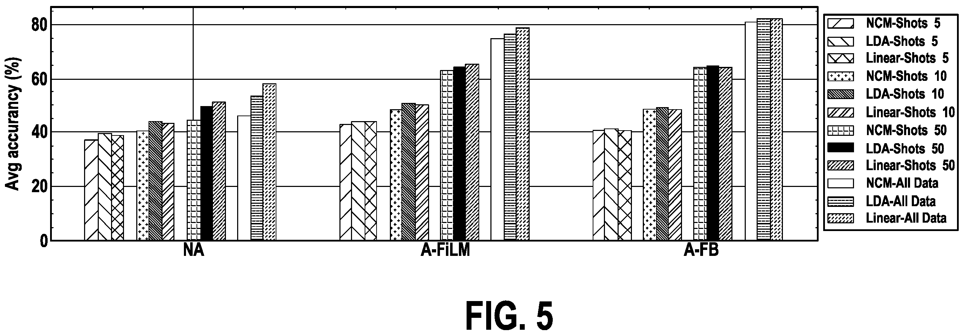

As shown on FIG. 5, LDA consistently outperforms both NCM and linear heads when the number of shots is equal to 5 and 10, regardless of adaptation technique. Overall, LDA performs similarly to the linear head in the high-shot settings and performs the best of all heads in the low-shot settings, which is particularly advantageous in the context of the invention as the computational burden associated with updating the LDA head is negligible and incremental updates are straightforward as discussed previously.

3 - CIL comparisons

As already mentioned, three different CIL settings are considered: (i) high-shot CIL, (ii) few-shot+ CIL, and (iii) few-shot CIL. The FSA/FSA-FiLM methods are compared with recent state-of-the-art CIL methods, including Decoupled-Cosine [15], CEC [16], and FACT [13].

3.1 - High-shot CIL setting

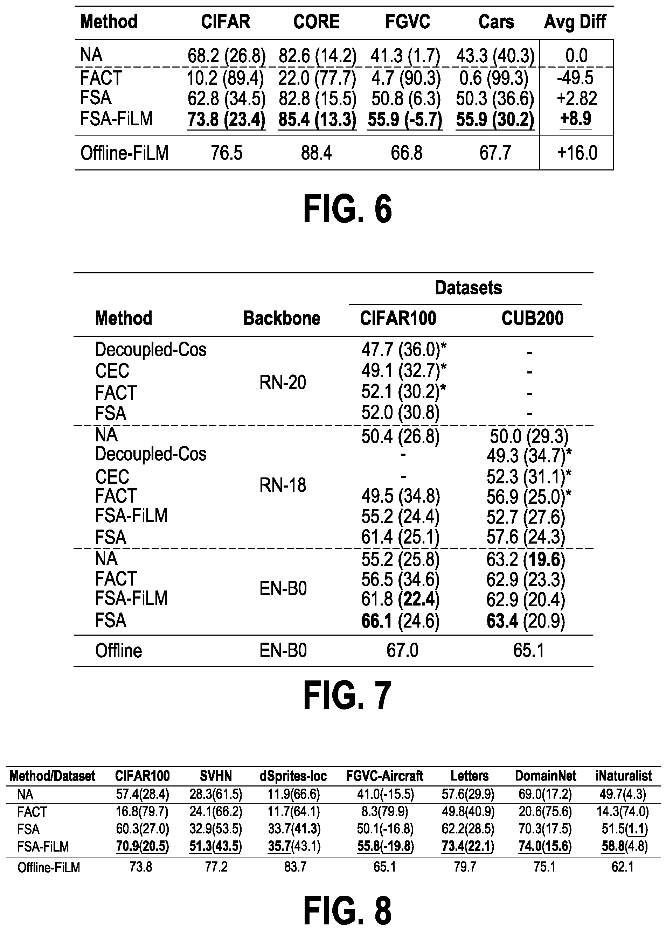

In this setting, one considers all the available training data for each class while keeping the number of novel classes in each session low. CIFAR100, CORE50, FGVC-Aircraft, and Cars are used for the experiments. For CIFAR100, CORE50, and FGVC-Aircraft, the first session consists of 10 classes and 16 for Cars. The rest of the sessions include 10 classes for CIFAR100, FGVC-Aircraft, and Cars and 5 for CORE50. Therefore, the total number of incremental sessions for CIFAR100, FGVC-Aircraft, and Cars is 10 while for CORE50 one has 9 sessions. A pre-trained backbone model on Imagenet-1k EfficientNet-BO is deployed as a backbone for all methods. Results are reported in the table shown on FIG. 6. More specifically, in the table of FIG. 6, last sessions test accuracy (%) ( ↑ ) and the PPDR (%) ( ↓ ) in parentheses are reported. The last column reports the average accuracy difference across all datasets between a baseline and NA. The best results across all methods are in bold and underlined. It can be seen that FSA-FiLM, overall, achieves performance not far from the offline setting and it outperforms all baselines in the 4 datasets.

3.2 - Few-shot+ CIL setting

This setting involves an first session that contains a large number of classes (around 50-60% of the total number of classes in the dataset) and all the available training images of these classes. The remaining sessions comprise a small number of classes and shots (typically 5/10-way 5-shot). Here, the few-shot setting described in [13] is followed for CIFAR100 and CUB200. ResNet-18 and EfficientNet-BO pre-trained on Imagenet-1k are used as backbones. The table shown on FIG. 7 summarizes the performance comparison between baselines. More specifically, in the table of FIG. 7, the accuracy (%) ( ↑ ) of the last session and the PPDR (%) ( ↓ ) in parentheses are reported. Asterisk (*) indicates that the reported results are from [13]. It can be seen that FSA performs on par with FACT on CIFAR100 when the original backbone of [13] (i.e. ResNet-20) is used, and it outperforms FACT by almost 10% when EfficientNet-BO is utilized while FSA-FiLM exhibits the lowest PPDR score. For CUB200, FSA with a ResNet-18 already outperforms all SOTA baselines while similar patterns for both accuracy and PPDR) are present when EfficientNet-BO is used. These results of FSA/FSA-FiLM set new SOTA performance on CIFAR 100 and CUB200 for the present setting.

3.3 - <u>Few-shot CIL setting</u>

This setting involves only a small number of data in all sessions, including the first. 50 shots per session are used while the first session includes 20% of the total number of classes of the dataset. Each of the remaining sessions includes around 10% of the total number of classes. Experiments are repeated 5 times. The table shown on FIG. 8 summarizes the performance comparison between baselines. More specifically, in the table of FIG. 8, the accuracy (%) ($\uparrow$) of the last session and the PPDR (%) ($\downarrow$) in parentheses are reported. It can be seen that FSA-FiLM outperforms all the other baselines by a large margin in terms of both accuracy and PPDR, indicating that transfer learning is considerably advantageous for CIL when the data availability is low.

<u>References:</u>

[1] Matthias De Lange, Rahaf Aljundi, Marc Masana, Sarah Parisot, Xu Jia, Ales Leonardis, Gregory Slabaugh, and Tinne Tuytelaars. A continual learning survey: Defying forgetting in classification tasks. IEEE Transactions on Pattern Analysis and Machine Intelligence, 44(7):3366-3385, 2021.

[2] Ethan Perez, Florian Strub, Harm De Vries, Vincent Dumoulin, and Aaron Courville. FiLM: Visual reasoning with a general conditioning layer. In Proceedings of the AAAI Conference on Artificial Intelligence, volume 32, 2018.

[3] Xiaohua Zhai, Joan Puigcerver, Alexander Kolesnikov, Pierre Ruyssen, Carlos Riquelme, Mario Lucic, Josip Djolonga, Andre Susano Pinto, Maxim Neumann, Alexey Dosovitskiy, et al. A large-scale study of representation learning with the visual task adaptation benchmark. arXiv preprint arXiv:1910.04867, 2019.

[4] Subhransu Maji, Esa Rahtu, Juho Kannala, Matthew Blaschko, and Andrea Vedaldi. Fine-grained visual classification of aircraft. arXiv preprint arXiv:1306.5151, 2013.

[5] Jonathan Krause, Michael Stark, Jia Deng, and Li Fei-Fei. 3d object representations for fine-grained categorization. In Proceedings of the IEEE International Conference on Computer Vision Workshops, pages 554-561, 2013.

[6] T. E. de Campos, B. R. Babu, and M. Varma. Character recognition in natural images. In Proceedings of the International Conference on Computer Vision Theory and Applications, Lisbon, Portugal, February 2009.

[7] C. Wah, S. Branson, P. Welinder, P. Perona, and S. Belongie. Technical Report CNS-TR-2011-001, California Institute of Technology, 2011.

[8] Vincenzo Lomonaco and Davide Maltoni. Core50: A new dataset and benchmark for continuous object recognition. In Conference on Robot Learning, pages 17-26. PMLR, 2017.

[9] Grant Van Horn, Oisin Mac Aodha, Yang Song, Yin Cui, Chen Sun, Alex Shepard, Hartwig Adam, Pietro Perona, and Serge Belongie. The iNaturalist Species Classification and Detection Dataset. In Proceedings of the IEEE Conference/CVF on Computer Vision and Pattern Recognition, pages 8769-8778, 2018.

[10] Xingchao Peng, Qinxun Bai, Xide Xia, Zijun Huang, Kate Saenko, and Bo Wang. Moment matching for multi-source domain adaptation. In Proceedings of the IEEE/CVF Conference on Computer Vision and Pattern Recognition, pages 1406-1415, 2019.

[11] Mingxing Tan and Quoc Le. Efficientnet: Rethinking model scaling for convolutional neural networks. In International Conference on Machine Learning, pages 6105-6114. PMLR, 2019.

[12] Kaiming He, Xiangyu Zhang, Shaoqing Ren, and Jian Sun. Deep residual learning for image recognition. In Proceedings of the IEEE/CVF Conference on Computer Vision and Pattern Recognition, pages 770-778, 2016.

[13] Da-Wei Zhou, Fu-Yun Wang, Han-Jia Ye, Liang Ma, Shiliang Pu, and De-Chuan Zhan. Forward compatible few-shot class-incremental learning. In Proceedings of the IEEE/CVF Conference on Computer Vision and Pattern Recognition, pages 9046-9056, 2022.

[14] Xiaoyu Tao, Xiaopeng Hong, Xinyuan Chang, Songlin Dong, Xing Wei, and Yihong Gong. Few-shot classincremental learning. In Proceedings of the IEEE/CVF Conference on Computer Vision and Pattern Recognition, pages 12183-12192, 2020.

[15] Oriol Vinyals, Charles Blundell, Timothy Lillicrap, Daan Wierstra, et al. Matching networks for one shot learning. Advances in Neural Information Processing Systems, 29, 2016.

[16] Chi Zhang, Nan Song, Guosheng Lin, Yun Zheng, Pan Pan, and Yinghui Xu. Few-shot incremental learning with continually evolved classifiers. In Proceedings of the IEEE/CVF Conference on Computer Vision and Pattern Recognition, pages 12455-12464, 2021.

[17] Ameya Prabhu, Philip HS Torr, and Puneet K Dokania. GDumb: A simple approach that questions our progress in continual learning. In European Conference on Computer Vision, pages 524-540. Springer, 2020.

**Claims**

1. A computer-implemented method of generating a machine learning model for classification using a pre-trained backbone model, comprising:

   - for a first training session, training (E30) the pre-trained backbone model using a first dataset,
   - connecting (E50) a classification head model on top of the trained backbone model, so as to obtain a main model,
   - for at least one second training session, training (E70) the main model using a second dataset while keeping the parameters of the trained backbone model fixed, the second dataset comprising at least one class distinct from the classes of the first dataset.

2. The method according to claim 1, wherein the training (E70) of the main model is iterated sequentially for each of a plurality of training sessions, each training session being performed with a dataset comprising at least one class distinct from the classes of the datasets used in the previous sessions, the parameters of the trained backbone model being kept fixed during each of said plurality of training sessions.

3. The method according to any one of claims 1 to 2, wherein, during the first training session, the training (E30) of the pre-trained backbone model is performed by updating the set of parameters of said backbone model.

4. The method according to any one of claims 1 to 3, wherein, during the first training session, the training (E30) of the pre-trained backbone model comprises:

   - modulating (E31) the pre-trained backbone model using a Feature-wise Linear Modulation technique, so as to generate an updated backbone model with additional parameters of Feature-wise Linear Modulation layers,
   - training (E32) the updated backbone model using the first dataset, the parameters of the pre-updated backbone model being kept fixed and only the parameters of the Feature-wise Linear Modulation layers being learned during said training.

5. The method according to any one of claims 1 to 4, wherein, during the first training session, the training (E30) of the pre-trained backbone model comprises:

   - connecting a classification layer on top of the backbone model,
   - training the model composed of the backbone model and the classification layer using the first dataset and a cross-entropy loss function,
   - removing the classification layer.

6. The method according to any one of claims 1 to 5, wherein the classification head model is a Linear Discriminant Analysis (LDA) classifier, and wherein, during each training session s of the main model, the weights and bias of said LDA classifier are determined according to the following formulas:

$$w_s^{(k)} = \ddot{H}_s^{-1} \hat{\mu}_s^{(k)} \quad and \quad b_s^{(k)} = \ln \frac{\left| X_s^{(k)} \right|}{\sum_{i=1}^s N_i} - \frac{1}{2} \hat{\mu}_s^{(k)^T} \ddot{H}_s^{-1} \hat{\mu}_s^{(k)}$$

where

$$\ddot{H}_s = H_s + I_d$$

$$\hat{\mu}_s^{(k)} = \frac{1}{\left| X_s^{(k)} \right|} \sum_{x \in X_s^{(k)}} g_{\theta^*}(x)$$

- $w_s^{(k)}$ and $b_s^{(k)}$ being respectively the weight and the bias of class k of said training session s,
- $H_s$ and $\ddot{H}_s$ being respectively the sample covariance matrix and the regularized sample covariance matrix of said training session s,
- $I_d$ being an identity matrix,
- $g_{\theta*}$ being the trained backbone model with fixed parameters $\theta*$,
- $X_s^{(k)}$ being the set of data belonging in class k of said training session s, and $|X_s^{(k)}|$ being the cardinality of $X_s^{(k)}$,
- $X_s$ being the set of data of said training session s, and $N_s$ being the cardinality of $X_s$.

7.  The method according to claim 6, wherein the sample covariance matrix $H_s$ is determined during each training session s of the main model according to the following formula:

$$H_s = \frac{1}{C-1}\left(A - \frac{1}{C}bb^T\right)$$

the parameters C, A and b being initialized in the following way:

$$C = N_1$$

$$A = \sum_{x \in X_1} g_{\theta*}(x)g_{\theta*}(x)^T$$

$$b = \sum_{x \in X_1} g_{\theta*}(x)$$

and thereafter determined recursively at each training session s of the main model in the following way:

- A is equal to the sum of the value taken by A during the previous training session of the main model and the quantity $\Sigma_{x \in X_s} g_{\theta*}(x)g_{\theta*}(x)^T$,
- b is equal to the sum of the value taken by b during the previous training session of the main model and the quantity $\Sigma_{x \in X_s} g_{\theta*}(x)$,
- C is equal to the sum of the value taken by C during the previous training session of the main model and the quantity $N_s$.

8.  The method according to any one of claims 1 to 5, wherein the classification head model is a Nearest Class Mean (NCM) classifier, and wherein, during each training session s of the main model, the weights and bias of said NCM classifier are determined according to the following formulas:

$$w_s^{(k)} = \hat{\mu}_s^{(k)} \quad and \quad b_s^{(k)} = \ln\frac{\left|X_s^{(k)}\right|}{\sum_{i=1}^{s} N_i} - \frac{1}{2}\hat{\mu}_s^{(k)^T}\hat{\mu}_s^{(k)}$$

where

$$\hat{\mu}_s^{(k)} = \frac{1}{\left|X_s^{(k)}\right|}\sum_{x \in X_s^{(k)}} g_{\theta*}(x)$$

- $w_s^{(k)}$ and $b_s^{(k)}$ being respectively the weight and the bias of class k of said training session s,
- $g_{\theta*}$ being the trained backbone model with fixed parameters $\theta*$,
- $X_s^{(k)}$ being the set of data belonging in class k of said training session s, and $|X_s^{(k)}|$ being the cardinality of $X_s^{(k)}$,
- $N_i$ being the cardinality of $X_i$, where $X_i$ is the set of data of said training session i.

9. The method according to any one of claims 1 to 8, wherein:

- the training sessions of the backbone model and the classification head model are performed according to a high-shot setting, or
- the first training session of the backbone model is performed according to a high-shot setting and the training sessions of the classification head model are performed according to a few-shot setting, or
- the training sessions of the backbone model and the classification head model are performed according to a few-shot setting.

10. A computer-implemented method of classifying data, comprising:

- generating a machine learning model for classification according to any one of claims 1 to 9,
- classifying data with the generated machine learning model.

11. The method according to claim 10, wherein the data to be classified are one of:

- images or features that have been extracted from images, for example images of road traffic or features that have been extracted from images of road traffic,
- CAN data obtained from sensors equipping a vehicle,
- video data,
- audio or voice data.

12. Use of the method of any one of claims 10 to 11 for at least one of:

- adapting the operation of a vehicle, for example to learn traffic signs,
- adapting the operation of a humanoid, for example to learn moving and/or interacting in an environment.

13. A computer program comprising instructions which, when the program is executed by a computer, cause the computer to perform a method according to any one of claims 1 to 9 or to any one of claims 10 to 11.

14. A computer-readable medium comprising instructions which, when executed by a computer, cause the computer to perform a method according to any one of claims 1 to 9 or to any one of claims 10 to 11.

15. A data processing system (100) comprising means configured to perform a method according to any one of claims 1 to 9 or to any one of claims 10 to 11.


**Amended claims in accordance with Rule 137(2) EPC.**

1. A computer-implemented method of classifying images of vehicles for vehicle recognition, said method comprising :

- generating a machine learning model for classification using a pre-trained backbone model,
- classifying images of vehicles for vehicle recognition with the generated machine learning model,

wherein generating the machine learning model comprises:

- for a first training session, training (E30) the pre-trained backbone model using a first dataset,
- connecting (E50) a classification head model on top of the trained backbone model, so as to obtain a main model,
- training (E70) the main model, the training of the main model being iterated sequentially for each of a plurality of training sessions, each training session being performed with a dataset comprising at least one class distinct from the classes of the datasets used in the previous sessions, the parameters of the trained backbone model being kept fixed during each of said plurality of training sessions,

and wherein, during the first training session, the training (E30) of the pre-trained backbone model comprises:

- modulating (E31) the pre-trained backbone model using a Feature-wise Linear Modulation technique, so as to generate an updated backbone model with additional parameters of Feature-wise Linear Modulation layers,
- training (E32) the updated backbone model using the first dataset, the parameters of the pre-updated backbone model being kept fixed and only the parameters of the Feature-wise Linear Modulation layers being learned during said training .

2. The method according to claim 1, wherein, during the first training session, the training (E30) of the pre-trained backbone model comprises:

- connecting a classification layer on top of the backbone model,
- training the model composed of the backbone model and the classification layer using the first dataset and a cross-entropy loss function,
- removing the classification layer.

3. The method according to any one of claims 1 to 2, wherein the classification head model is a Linear Discriminant Analysis (LDA) classifier, and wherein, during each training session s of the main model, the weights and bias of said LDA classifier are determined according to the following formulas:

$$w_s^{(k)} = \ddot{H}_s^{-1} \hat{\mu}_s^{(k)} \quad and \quad b_s^{(k)} = \ln \frac{\left| X_s^{(k)} \right|}{\sum_{i=1}^s N_i} - \frac{1}{2} \hat{\mu}_s^{(k)T} \ddot{H}_s^{-1} \hat{\mu}_s^{(k)}$$

where

$$\ddot{H}_s = H_s + I_d$$

$$\hat{\mu}_s^{(k)} = \frac{1}{\left| X_s^{(k)} \right|} \sum_{x \in X_s^{(k)}} g_{\theta^*}(x)$$

- $w_s^{(k)}$ and $b_s^{(k)}$ being respectively the weight and the bias of class k of said training session s,
- $H_s$ and $\ddot{H}_s$ being respectively the sample covariance matrix and the regularized sample covariance matrix of said training session s,
- $I_d$ being an identity matrix,
- $g_{\theta^*}$ being the trained backbone model with fixed parameters $\theta^*$,
- $X_s^{(k)}$ being the set of data belonging in class k of said training session s, and $|X_s^{(k)}|$ being the cardinality of $X_s^{(k)}$,
- $X_s$ being the set of data of said training session s, and $N_s$ being the cardinality of $X_s$.

4. The method according to claim 3, wherein the sample covariance matrix $H_s$ is determined during each training session s of the main model according to the following formula:

$$H_s = \frac{1}{C-1} \left( A - \frac{1}{C} bb^T \right)$$

the parameters C, A and b being initialized in the following way:

$$C = N_1$$

$$A = \sum_{x \in X_1} g_{\theta^*}(x) g_{\theta^*}(x)^T$$

$$b = \sum_{x \in X_1} g_{\theta^*}(x)$$

and thereafter determined recursively at each training session s of the main model in the following way:

- A is equal to the sum of the value taken by A during the previous training session of the main model and the quantity $\Sigma_{x \in Xs}\, g_{\theta^*}(x) g_{\theta^*}(x)^T$,
- b is equal to the sum of the value taken by b during the previous training session of the main model and the quantity $\Sigma_{x \in Xs}\, g_{\theta^*}(x)$,
- C is equal to the sum of the value taken by C during the previous training session of the main model and the quantity $N_s$.

5. The method according to any one of claims 1 to 2, wherein the classification head model is a Nearest Class Mean (NCM) classifier, and wherein, during each training session s of the main model, the weights and bias of said NCM classifier are determined according to the following formulas:

$$w_s^{(k)} = \hat{\mu}_s^{(k)} \quad and \quad b_s^{(k)} = \ln \frac{\left| X_s^{(k)} \right|}{\sum_{i=1}^{s} N_i} - \frac{1}{2} \hat{\mu}_s^{(k)^T} \hat{\mu}_s^{(k)}$$

where

$$\hat{\mu}_s^{(k)} = \frac{1}{\left| X_s^{(k)} \right|} \sum_{x \in X_s^{(k)}} g_{\theta^*}(x)$$

- $w_s^{(k)}$ and $b_s^{(k)}$ being respectively the weight and the bias of class k of said training session s,
- $g_{\theta^*}$ being the trained backbone model with fixed parameters $\theta^*$,
- $X_s^{(k)}$ being the set of data belonging in class k of said training session s, and $|X_s^{(k)}|$ being the cardinality of $X_s^{(k)}$,
- $N_i$ being the cardinality of $X_i$, where $X_i$ is the set of data of said training session i.

6. The method according to any one of claims 1 to 5, wherein:

- the training sessions of the backbone model and the classification head model are performed according to a high-shot setting, or
- the first training session of the backbone model is performed according to a high-shot setting and the training sessions of the classification head model are performed according to a few-shot setting, or
- the training sessions of the backbone model and the classification head model are performed according to a few-shot setting.

7. A computer program comprising instructions which, when the program is executed by a computer, cause the computer to perform a classification method according to any one of claims 1 to 6.

8. A computer-readable medium comprising instructions which, when executed by a computer, cause the computer to perform a classification method according to any one of claims 1 to 6.

9. A data processing system (100) comprising means configured to perform a classification method according to any one of claims 1 to 6.

**FIG.1**

**FIG.2**

Receiving a pre-trained backbone model ⎯ E10

Receiving a first dataset ⎯ E20

Training the pre-trained backbone model ⎯ E30

Modulating the pre-trained backbone model using Feature-wise Linear Modulation Layers ⎯ E31

Training the updated back bone model using the first dataset ⎯ E32

Receiving a classification head model ⎯ E40

Connecting the classification head model on top of the trained backbone model, so as to obtain a main model ⎯ E50

Receiving another dataset ⎯ E60

Training the main model using said another dataset ⎯ E70

# FIG.3

Generating a classifier f —— F10

Classifying data with said classifier f —— F20

# FIG.4

**FIG. 5**

| Method | CIFAR | CORE | FGVC | Cars | Avg Diff |
|---|---|---|---|---|---|
| NA | 68.2 (26.8) | 82.6 (14.2) | 41.3 (1.7) | 43.3 (40.3) | 0.0 |
| FACT | 10.2 (89.4) | 22.0 (77.7) | 4.7 (90.3) | 0.6 (99.3) | -49.5 |
| FSA | 62.8 (34.5) | 82.8 (15.5) | 50.8 (6.3) | 50.3 (36.6) | +2.82 |
| FSA-FiLM | **73.8 (23.4)** | **85.4 (13.3)** | **55.9 (-5.7)** | **55.9 (30.2)** | **+8.9** |
| Offline-FiLM | 76.5 | 88.4 | 66.8 | 67.7 | +16.0 |

## FIG. 6

| Method | Backbone | Datasets | |
|---|---|---|---|
| | | CIFAR100 | CUB200 |
| Decoupled-Cos | RN-20 | 47.7 (36.0)* | - |
| CEC | | 49.1 (32.7)* | - |
| FACT | | 52.1 (30.2)* | - |
| FSA | | 52.0 (30.8) | - |
| NA | RN-18 | 50.4 (26.8) | 50.0 (29.3) |
| Decoupled-Cos | | - | 49.3 (34.7)* |
| CEC | | - | 52.3 (31.1)* |
| FACT | | 49.5 (34.8) | 56.9 (25.0)* |
| FSA-FiLM | | 55.2 (24.4) | 52.7 (27.6) |
| FSA | | 61.4 (25.1) | 57.6 (24.3) |
| NA | EN-B0 | 55.2 (25.8) | 63.2 (**19.6**) |
| FACT | | 56.5 (34.6) | 62.9 (23.3) |
| FSA-FiLM | | 61.8 (**22.4**) | 62.9 (20.4) |
| FSA | | **66.1** (24.6) | **63.4** (20.9) |
| Offline | EN-B0 | 67.0 | 65.1 |

## FIG. 7

| Method/Dataset | CIFAR100 | SVHN | dSprites-loc | FGVC-Aircraft | Letters | DomainNet | iNaturalist |
|---|---|---|---|---|---|---|---|
| NA | 57.4(28.4) | 28.3(61.5) | 11.9(66.6) | 41.0(-15.5) | 57.6(29.9) | 69.0(17.2) | 49.7(4.3) |
| FACT | 16.8(79.7) | 24.1(66.2) | 11.7(64.1) | 8.3(79.9) | 49.8(40.9) | 20.6(75.6) | 14.3(74.0) |
| FSA | 60.3(27.0) | 32.9(53.5) | 33.7(**41.3**) | 50.1(-16.8) | 62.2(28.5) | 70.3(17.5) | 51.5(**1.1**) |
| FSA-FiLM | **70.9(20.5)** | **51.3(43.5)** | **35.7**(43.1) | **55.8(-19.8)** | **73.4(22.1)** | **74.0(15.6)** | **58.8**(4.8) |
| Offline-FiLM | 73.8 | 77.2 | 83.7 | 65.1 | 79.7 | 75.1 | 62.1 |

## FIG. 8

**EUROPEAN SEARCH REPORT**

Application Number

EP 23 16 2188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAYES TYLER L ET AL: "Lifelong Machine Learning with Deep Streaming Linear Discriminant Analysis", 2020 IEEE/CVF CONFERENCE ON COMPUTER VISION AND PATTERN RECOGNITION WORKSHOPS (CVPRW), IEEE, 14 June 2020 (2020-06-14), pages 887-896, XP033798809, DOI: 10.1109/CVPRW50498.2020.00118 [retrieved on 2020-07-27] * Sections 3 and 4 * | 1-6,8-15 | INV. G06N3/045 G06N3/096 |
| X | LI DE-WANG ET AL: "Few-Shot Class-Incremental Learning via Compact and Separable Features for Fine-Grained Vehicle Recognition", IEEE TRANSACTIONS ON INTELLIGENT TRANSPORTATION SYSTEMS, IEEE, PISCATAWAY, NJ, USA, vol. 23, no. 11, 1 November 2022 (2022-11-01), pages 21418-21429, XP011926813, ISSN: 1524-9050, DOI: 10.1109/TITS.2022.3174662 [retrieved on 2022-05-23] * Sections III to V * | 1-15 | |
| A | ALIAKSANDRA SHYSHEYA ET AL: "FiT: Parameter Efficient Few-shot Transfer Learning for Personalized and Federated Image Classification", ARXIV.ORG, CORNELL UNIVERSITY LIBRARY, 201 OLIN LIBRARY CORNELL UNIVERSITY ITHACA, NY 14853, 2 February 2023 (2023-02-02), XP091433153, * the whole document * | 4 | |

TECHNICAL FIELDS SEARCHED (IPC)

G06N

-/--

The present search report has been drawn up for all claims

| Place of search | Date of completion of the search | Examiner |
|---|---|---|
| The Hague | 30 June 2023 | Jacobs, Jan-Pieter |

EPO FORM 1503 03.82 (P04C01)

page 1 of 2

## EUROPEAN SEARCH REPORT

| | | Application Number |
|---|---|---|
| | | EP 23 16 2188 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TIMOTH\'EE LESORT ET AL: "Continual Learning in Deep Networks: an Analysis of the Last Layer", ARXIV.ORG, CORNELL UNIVERSITY LIBRARY, 201 OLIN LIBRARY CORNELL UNIVERSITY ITHACA, NY 14853, 18 November 2021 (2021-11-18), XP091088970, * the whole document * | 1-15 | |

TECHNICAL FIELDS
SEARCHED     (IPC)

The present search report has been drawn up for all claims

| Place of search | Date of completion of the search | Examiner |
|---|---|---|
| The Hague | 30 June 2023 | Jacobs, Jan-Pieter |

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MATTHIAS DE LANGE ; RAHAF ALJUNDI ; MARC MASANA ; SARAH PARISOT ; XU JIA ; ALES LEONARDIS ; GREGORY SLABAUGH ; TINNE TUYTELAARS.** A continual learning survey: Defying forgetting in classification tasks. *IEEE Transactions on Pattern Analysis and Machine Intelligence,* 2021, vol. 44 (7), 3366-3385
- **ETHAN PEREZ ; FLORIAN STRUB ; HARM DE VRIES ; VINCENT DUMOULIN ; AARON COURVILLE.** FiLM: Visual reasoning with a general conditioning layer. *In Proceedings of the AAAI Conference on Artificial Intelligence,* 2018, vol. 32
- **XIAOHUA ZHAI ; JOAN PUIGCERVER ; ALEXANDER KOLESNIKOV ; PIERRE RUYSSEN ; CARLOS RIQUELME ; MARIO LUCIC ; JOSIP DJOLONGA ; ANDRE SUSANO PINTO ; MAXIM NEUMANN ; ALEXEY DOSOVITSKIY et al.** A large-scale study of representation learning with the visual task adaptation benchmark. *arXiv preprint arXiv:1910.04867,* 2019
- **SUBHRANSU MAJI ; ESA RAHTU ; JUHO KANNALA ; MATTHEW BLASCHKO ; ANDREA VEDALDI.** Fine-grained visual classification of aircraft. *arXiv preprint arXiv:1306.5151,* 2013
- **JONATHAN KRAUSE ; MICHAEL STARK ; JIA DENG ; LI FEI-FEI.** 3d object representations for fine-grained categorization. *Proceedings of the IEEE International Conference on Computer Vision Workshops,* 2013, 554-561
- **T. E. DE CAMPOS ; B. R. BABU ; M. VARMA.** Character recognition in natural images. *Proceedings of the International Conference on Computer Vision Theory and Applications, Lisbon, Portugal,* February 2009
- **C. WAH ; S. BRANSON ; P. WELINDER ; P. PERONA ; S. BELONGIE.** *Technical Report CNS-TR-2011-001, California Institute of Technology,* 2011
- **VINCENZO LOMONACO ; DAVIDE MALTONI.** Core50: A new dataset and benchmark for continuous object recognition. *Conference on Robot Learning,* 2017, 17-26
- **GRANT VAN HORN ; OISIN MAC AODHA ; YANG SONG ; YIN CUI ; CHEN SUN ; ALEX SHEPARD ; HARTWIG ADAM ; PIETRO PERONA ; SERGE BELONGIE.** The iNaturalist Species Classification and Detection Dataset. *Proceedings of the IEEE Conference/CVF on Computer Vision and Pattern Recognition,* 2018, 8769-8778

- **XINGCHAO PENG ; QINXUN BAI ; XIDE XIA ; ZIJUN HUANG ; KATE SAENKO ; BO WANG.** Moment matching for multi-source domain adaptation. *Proceedings of the IEEE/CVF Conference on Computer Vision and Pattern Recognition,* 2019, 1406-1415
- **MINGXING TAN ; QUOC LE.** Efficientnet: Rethinking model scaling for convolutional neural networks. *International Conference on Machine Learning,* 2019, 6105-6114
- **KAIMING HE ; XIANGYU ZHANG ; SHAOQING REN ; JIAN SUN.** Deep residual learning for image recognition. *Proceedings of the IEEE/CVF Conference on Computer Vision and Pattern Recognition,* 2016, 770-778
- **DA-WEI ZHOU ; FU-YUN WANG ; HAN-JIA YE ; LIANG MA ; SHILIANG PU ; DE-CHUAN ZHAN.** Forward compatible few-shot class-incremental learning. *Proceedings of the IEEE/CVF Conference on Computer Vision and Pattern Recognition,* 2022, 9046-9056
- **XIAOYU TAO ; XIAOPENG HONG ; XINYUAN CHANG ; SONGLIN DONG ; XING WEI ; YIHONG GONG.** Few-shot classincremental learning. *Proceedings of the IEEE/CVF Conference on Computer Vision and Pattern Recognition,* 2020, 12183-12192
- **ORIOL VINYALS ; CHARLES BLUNDELL ; TIMOTHY LILLICRAP ; DAAN WIERSTRA et al.** Matching networks for one shot learning. *Advances in Neural Information Processing Systems,* 2016, vol. 29
- **CHI ZHANG ; NAN SONG ; GUOSHENG LIN ; YUN ZHENG ; PAN PAN ; YINGHUI XU.** Few-shot incremental learning with continually evolved classifiers. *Proceedings of the IEEE/CVF Conference on Computer Vision and Pattern Recognition,* 2021, 12455-12464
- GDumb: A simple approach that questions our progress in continual learning. **AMEYA PRABHU ; PHILIP HS TORR ; PUNEET K DOKANIA.** European Conference on Computer Vision. Springer, 2020, 524-540